# EUROPEAN PATENT APPLICATION

(11) **EP 1 440 625 A2**
(43) Date of publication of application: **28.07.2004**
(21) Application number: 04075200.8
(22) Date of filing: 27.01.2004
(51) Int. Cl.: A23N 17/00, A23N 17/02

(54) **Batch-cycle type heat-treatment apparatus for treating of material like mash fodder as well as a method using such an apparatus for treatment of material**

(30) Priority: 27.01.2003 JP 2003017731
(71) Applicant: Dinnissen B.V., 5975 NB Sevenum (NL)
(72) Inventor: Aono, Kimi C/o Aerox Co., Ltd., Yokohama, Kanagawa Pref. (JP); Sugiyama, Jiro C/o Aerox Co., Ltd., Yokohama, Kanagawa Pref. (JP)
(74) Representative: Veldman-Dijkers, Cornelia G.C., Ir.

(57) **Abstract**

A batch-cycle type heat-treatment apparatus for heating mash fodder includes a heat-treatment unit (2) for treatment of material like mash fodder and a dryer cooler (4) for drying and cooling the heated fodder, and a buffer hopper in which the material is temporarily stored, which buffer hopper (3) is located between the heat-treatment unit (2) and the dryer cooler (4). In one embodiment, the dryer cooler (4) is provided with an agitator (45) including a rotational central shaft (451) and stirring blades (452) having air injectors (453) being capable of spraying air so as to dry and cool the fodder by injecting air while the fodder being stirred.

## Description

The invention relates to a batch-cycle type heat-treatment apparatus for treating of material like mash fodder comprising:
a heat-treatment unit for heating the material; and
a dryer cooler disposed below the heat-treatment unit for drying and cooling the heated material.

The invention furthermore relates to a heat treatment method using such a batch-cycle type heat treatment apparatus for heating material like mash fodder.

Hitherto, material like meat or as fodder for domestic animals, mash fodder, pelleted fodder, or crumbled fodder has been used, wherein the pelleted fodder and the crumbled fodder are heated with steam as pretreatment of processing, whereas almost the fodder for chickens is so-called mash fodder, in which raw materials are only crushed and mixed without being absolutely heated.

Incidentally, measures against Salmonella of the fodder for chickens come up recently as an important problem, so that it has been necessary to have a heating process for pasteurizing the mash fodder.

Since the mash fodder is powder, while the heat treatment for pasteurization is difficult, it is required to dry and further cool the fodder after heating, so that it is difficult in efficiently performing each process.

Heat-treatment equipment for heating, and then drying, and further cooling the mash fodder is proposed in Japanese Unexamined Patent Application Publication No. 2000-189136, for example.

This heat-treatment equipment according to the invention has a heat-treatment apparatus and a drying and cooling apparatus linked thereto, in which heat-treated fodder is fed to drying and cooling apparatus via a duct, which in turn is dried within the drying and cooling apparatus by spraying hot air thereto from lower through upper portions thereof, and further cooled by spraying cooling air thereto within the same drying and cooling apparatus similarly from the lower portion thereof.

Therefore, in the processes, it is enormously advantageous that fodder is heated with steam so as to be dried and cooled thereafter, enabling the mash fodder to be pasteurized.

Besides, there is another proposal in International Publication WO-00/60958.

This proposal is that the heat-treatment is performed while fodder is agitated with a mixer, and after the heat treatment, the fodder is transferred to a dryer/cooler so as to perform drying and cooling thereon.

Also, after the drying and cooling in the dryer/cooler, it is possible to transfer the cooled fodder to another batch mixer so as to be mixed with another material.

As described above, powder mash fodder can even be pasteurized by heating it with steam, and then the high-temperature fodder containing moisture is dried and further cooled, so that hygienic fodder can be provided, preventing animal diseases.

In performing the heat treatment on the mash fodder with steam for pasteurization, in particular for measures against Salmonella, it is important to precisely heat the entire fodder and to have a sufficient heating time.

However, in the equipment disclosed in Japanese Unexamined Patent Application Publication No. 2000-189136 described above, the process is basically continuous, so that steam is continuously sprayed on continuously flowing fodder, and then drying and cooling are performed thereon.

Since it is difficult to allow the entire fodder to constantly flow at the same speed in this case, there is uncertainty in asserting that the fodder is absolutely heated at the same temperature and has a constant and sufficient heating time.

Then, the proposal in International Publication WO-00/60958 is a batch cycle type; if a type of batch mixer such as a conventional uniaxial puddle mixer or ribbon mixer is used, steam is difficult to be uniformly mixed with fodder and also an excessive period of time is taken until the steam is uniformly mixed with fodder, so that a lump is liable to be produced during the steam mixing and a sufficient heating time is difficult to be taken.

A problem of degradation in some ingredient due to excessive heating thereof also arises.

Besides, there may be a risk of contamination of the heated fodder in the dryer/cooler just below the mixer, if partially and insufficiently heated fodder drips off from the mixer during the heating process.

In such a manner, we must say that this method is also insufficient for securely pasteurizing fodder.

Furthermore, in any case described above, the dryer/cooler is a conventional system used in feed mills, in which air is only sprayed from the bottom up, so that there is a problem in the powder mash fodder that an air passage is liable to be produced.

Therefore, unevenness in drying and cooling may be produced, resulting in inefficiencies.

There is also a drawback that condensation may occur, so that fodder is liable to remain within the cooler.

Accordingly, in order to securely perform the heat treatment on the entire fodder efficiently, i.e., to heat, dry, and cool the fodder, some sort of countermeasure has been demanded.

It is an object of the invention to provide an apparatus by means of which material like mash fodder can be efficiently and correctly being heated, dried and cooled.

This object is being achieved by the apparatus according to the invention in that
a buffer hopper having an on-off valve is disposed between the heat-treatment unit and the dryer cooler,
wherein at least the inner surface of the buffer hopper can be heated so as to have the buffer hopper being capable of heating the material dropping from the heat-treatment unit.

Material which has been treated in the heat treatment unit will be temporarily stored in the buffer hopper to be heated again. Also material which accidently leaves the heat treatment unit before the heat treatment in the heat treatment unit has been finished, will be heated in the buffer hopper so that no material will enter the dryer cooler without being heated sufficiently.

An embodiment of the batch-cycle type heat treatment apparatus according to the invention is characterized in that the dryer cooler provided with an agitator comprising a rotational central shaft and stirring blades having air injectors being capable of spraying air so as to dry and/or heat/cool the material by injecting air while the material being stirred.

In this manner air can be sprayed to the inside of the material whilst the material is being steered so that the drying and heating/cooling efficiencies can be extremely improved whereby the entire material will be uniformly dried and heated/cooled.

The invention furthermore relates to a batch-cycle type heat-treatment apparatus for treatment of material like mash fodder comprising a dryer cooler provided with an agitator comprising a rotational central shaft and stirring blades having air injectors being capable of spraying air so as to dry and/or heat/cool the material by injecting air while the material is being stirred.

Air will be used for drying and/or heating/cooling the material whereby the air will be sprayed to the inside of the material while the material is being steered. The drying and/or heating/cooling efficiencies will be extremely high and the material will be uniformly dried and/or heated/cooled.

### Brief Description of the Drawings

Fig. 1 is a drawing of an example of a heat-treatment apparatus according to the present invention.
Fig. 2 is a drawing of an example of the shape of an agitator of the heat-treatment apparatus according to the present invention.
Fig. 3 is a drawing showing an airflow example the agitator of the heat-treatment apparatus according to the present invention.
Fig. 4 is a drawing of an example of a bottom plate according to the present invention.
Fig. 5 is a drawing of an example showing an arrangement of filters in a third room of the heat-treatment apparatus according to the present invention.
Fig. 6 is a drawing of the example showing the arrangement of the filters in the third room of the heat-treatment apparatus according to the present invention.

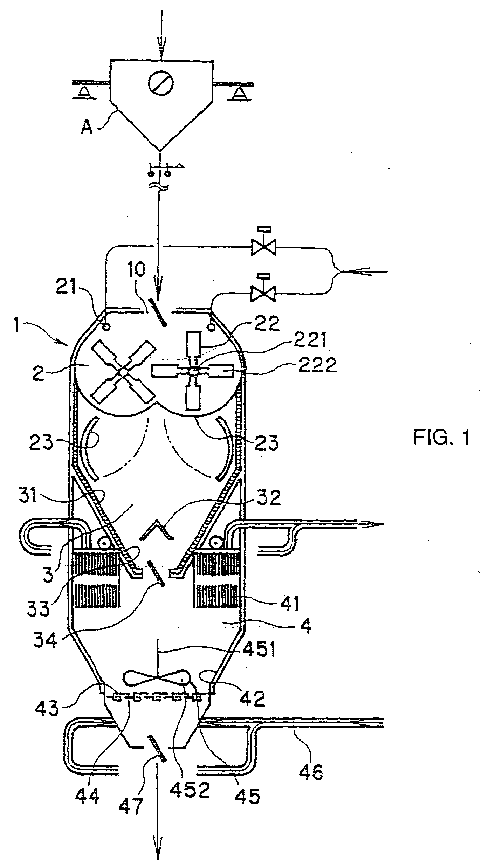

A basic embodiment according to the present invention is illustrated in Fig. 1.

As shown in Fig. 1, there is provided a hopper A, in which mash fodder is pumped, and a heat-treatment apparatus 1 according to the present invention is linked thereto.

Therefore, if fodder is pumped into the hopper A, the fodder is fed to the heat-treatment apparatus 1.

The heat-treatment apparatus 1 is provided with a batch type mixer, i.e., a twin shaft paddle mixer 22, arranged on an upper portion inside the device.

The paddle mixer 22 has two shafts 221 with axes arranged in parallel to a surface of an upper opening 10 of the heat-treatment apparatus body 1, i.e., in a direction perpendicular to the inside direction of the body 1, each shaft 221 having a plurality of paddles 222 protruded from the axis, so that by rotating the paddle mixer 22, the paddles 222 are rotated for stirring fodder.

Below the paddle mixer 22, there is provided an openable lid 23, and when fodder is put into the heat-treating device, a first room 2 containing the twin shaft paddle mixer 22 can be formed by closing the openable lid 23.

Therefore, in a state that fodder is put into the first room 2, if the twin shaft paddle mixer 22 is rotated, the fodder and steam can be uniformly stirred efficiently in a short period of time.

Inside the first room 2 of the heat-treatment apparatus body 1, steam spray nozzles 21 are arranged for spraying steam into the first room 2, so as to form the heat-treatment unit 2 for spraying steam so as to perform the heat-treatment while the fodder within the first room 2 being stirred.

In particular, by heating fodder while steam being sprayed therein, the fodder can be efficiently and uniformly heated to the inside thereof.

In this case, it is not limited to that the batch type mixer, i.e., the paddle mixer 22 is rotated during the steam spraying, but, for example, after heating and stirring fodder by rotating the paddle mixer 22 while steam being sprayed for a predetermine period of time, only the steam is stopped spraying, only the paddle mixer 22 is further rotated for a predetermine period of time, so that the heat-treatment of the fodder is enabled extremely effectively.

Although the entire fodder is by nature heated extremely effectively because steam can be sprayed during the stirring, as mentioned above, excessive heating may cause thermal damages of fodder ingredients and furthermore, unnecessary heating is wasteful, resulting in energy loss.

Therefore, after steam is sprayed only for a predetermine period of time, the steam is stopped spraying and only the paddle mixer 22 is rotated so as to further stir the fodder already heated at a high temperature and to uniformly heat the entire fodder, so that desired heat-treatment can be absolutely effectively performed by having a sufficient heating time.

By adopting this method, the mixing of fodder is further progressed while a moisture content of the fodder is uniformized so as to prevent a lump (cake) from being produced as well as to prevent the fodder from sticking to and remaining on the surface of the inside of the first room 2 and the paddle mixer 22.

In performing the heat-treatment on fodder with steam for sterilizing Salmonella, for example, it is necessary for obtaining perfect pasteurizing to have sufficient heating temperature and heating time in the heat-treatment, about 80° of fodder temperature for two minutes or more, for example.

However, in a case of an inefficient heating device or in a case where certainty and safety are excessively emphasized, steam is liable to be sprayed for an excessively long time, causing degradation of fodder.

Therefore, after steam is sprayed and mixed by an amount necessary for heating fodder to a target temperature for a predetermined period of time, the steam is stopped spraying, so that a sufficient heating time can be secured by further continuing the stirring of the paddle mixer 22 for a predetermined period of time and the steam is efficiently exerted inside the fodder uniformly, enabling the Salmonella sterilizing efficiency of the entire fodder to be improved.

In addition, the reason why the paddle mixer 22 is the twin shaft is to further promote the stirring between the fodder and steam; it is not limited to the twin shaft but a multiple-shaft type may be of course used.

Next, the heat-treatment unit 2 constituted of the first room 2 of the heat-treatment apparatus is provided with a buffer hopper 3 arranged below the heat-treatment unit 2 and having an on-off valve 34.

The hopper 3 is a substantially conical shape protruded downward and having the on-off valve 34 at the cone point.

Accordingly, after the heat-treatment is performed in the first room 2, which is the heat-treatment unit 2, if the openable lid 23 is opened, fodder drops into a second room 3 formed by the buffer hopper 3.

The second room 3 is for temporarily storing the heated fodder if required as a preliminary step toward the drying and cooling performed by the dryer/cooler 4.

Therefore, while the heated fodder is transferred to the dryer/cooler 4 if it is possible, according to need such as a case where the fodder heated earlier is yet dried and cooled by the dryer/cooler 4, the fodder heated already can be temporarily stored in the second room 3.

Besides, by having the buffer hopper 3, which is the second room 3, in particular, in a case where the fodder being stirred and heated in the first room 2 has leaked from the first room 2, the leaked fodder can be prevented from being mixed into the subsequent dryer/cooler 4.

That is, the fodder heated insufficiently is prevented from being mixed into the dryer/cooler 4 as it is, enabling complete pasteurizing to be performed.

In order to do so, it is preferable to heat the buffer hopper 3. That is, this is for securely pasteurizing dropped fodder by heating it with the heated buffer hopper 3 if insufficiently heated fodder drops.

The buffer hopper 3 may be that at least fodder contacting the inner wall of the hopper 3 is heated with known heating means such as heating with hot water passed through a double walled structure of the buffer hopper 3 or heating with electricity.

The structure shown in this figure has an electrical heating surface 31 formed on an inner wall 33 of the buffer hopper 3 so as to heat the fodder dropped on the surface by heating the electrical heating surface 31.

In addition, it is preferable that the heat-treatment apparatus 1 itself be thermally insulated for preventing temperature fall of the device 1 and condensation thereof.

Furthermore, by providing a baffle 32 obliquely arranged above the on-off valve 34 in the second room 3, the fodder leaking from the first room 2 abuts the baffle 32 so as to be deflected and dropped on the electrical heating surface 31.

That is, although the fodder dropped in the buffer hopper 3 drops on the inner wall 33 of the buffer hopper 3 directly to be heated thereon by contacting the electrical heating surface 31, whereas if the fodder drops on the on-off valve 34, it may be not heated leaving not pasteurized fodder, so that the dropping direction is restricted with the baffle 32 so that the entire dropped fodder drops on the inner wall 33 of the buffer hopper 3.

Then, the heat-treatment apparatus 1 has a third room 4 arranged in the lower portion of the device 1, i.e., below the second room 3.

This is the third room 4 disposed below the second room 3, into which the fodder stored in the second room 3 drops if the on-off valve 34 is opened.

The third room 4 is the dryer/cooler 4 for drying and cooling the fodder.

The third room 4 constituting the dryer/cooler 4 is arranged in a lower portion forming the heat-treatment apparatus 1, and it is preferable that the shape of the third room 4 be a substantial circular cone having an apex at the bottom or a substantial circular cylinder.

Also, the shape of the third room 4 may be a polygonal substantial pyramid having an apex at the bottom and being close to a substantial circular cone or may be a polygonal substantial prism close to a substantial circular cylinder.

A dryer/cooler of a conventional heat-treatment apparatus has been frequently rectangular shaped, so that dead corners are formed at the four corners when air is sprayed for drying and cooling fodder so as to inhibit the drying and cooling effects while condensation being liable to be produced and the fodder being liable to remain when it is discharged. Whereas, by the shapes mentioned above, the remains at the corners and the disadvantages can be prevented.

That is, dead corners of the entire inside of the dryer/cooler 4 are eliminated, so that air can be entirely sprayed all over and condensation can be prevented during the drying and cooling the heated fodder.

Also, since a side surface 42 is linearly or obliquely formed downward, the inner surface is smooth, preventing powder fodder from remaining.

In addition, in an internal upper circumference of the third room 4, a dust collection filter 41 is arranged, and when air is sprayed for drying and cooling fodder, the air is exhausted outside through the dust collection filter 41.

Next, a bottom plate 43, on which fodder can be placed, is arranged in a lower portion forming the third room 4, and the bottom plate 43 is provided with holes 44, through which air is sprayed for blowing the fodder placed on the bottom plate 43 through upward from the bottom of the fodder.

Therefore, the fodder on the bottom plate 43 can exhaust air from the bottom thereof through the holes 44.

Then, in a lower portion formi ng the third room 4 of the dryer/cooler 4 according to the present invention, agitator 45 is arranged.

The agitator 45 can stir fodder in a drying process and a cooling process, and it stirs the fodder so as to rapidly dry or cool the entire fodder uniformly during the spraying air passing from the bottom through the holes 44 of the bottom plate 43.

In addition, the air is supplied from an aeration pipe 46 therethrough.

In a conventional dryer/cooler, air is generally sprayed from the bottom of fodder so as to exhaust the air from the bottom of the fodder upward, and the air blows the inside of the fodder therethrough upward so as to dry and cool the fodder.

Therefore, although the air blows through the inside of the fodder upward from the bottom so as to be passed also through the inside the fodder enabling the drying and cooling effects to be improved, an air passage for blowing air upward from the bottom of the fodder is liable to be produced, so that only the side surface of the air passage can contact the air.

In a case where fodder is fine powder in particular, although the air passage for blowing air upward from the bottom of the fodder is liable to be produced, a large amount of air passes through the air passage produced at the beginning while new passages are difficult to be produced in other parts because of powder, so that the entire air passes through specific several air-passages.

Accordingly, air is not brought into contact with portions of fodder separated from the air passages, so that a number of portions of the inside of fodder cannot be efficiently dried and cooled.

Whereas, by spraying air while fodder being stirred with the agitator 45, not only a new air-passage is produced in each case by breaking the produced air passage but also air can be sprayed into the entire fodder while the fodder is stirred by the agitator 45, preventing drying and cooling from escaping and enabling the drying and cooling to be efficiently performed in a matter of minutes.

Furthermore, the agitator 45 shown in the figure has a rotational central shaft 451 having a plurality of stirring blades 452 at the end extremity while the stirring blades 452 are located in a lower portion forming the third room 4, which is the dryer/cooler 4 and enables the stirring blades 452 to be rotated in a direction horizontal to the bottom plate 43 in the third room 4.

Therefore, the fodder within the third room 4 is stirred by the stirring blades 452 as well as is evened so as to flatten the product layer.

Such a stirring blades 452 is provided with air injectors 453 arranged on side faces in the direction opposite to the rotational direction of the blades 452 for spraying air therefrom.

Therefore, the stirring blades 452 of the agitator 45 can spray air to the inside of fodder in the direction opposite to the rotational direction while the fodder being stirred, so that air can pervade the entire inside of the fodder absolutely efficiently, securing the drying and cooling effects.

It is most preferable that a number of the air injectors 453 formed on side faces in the direction opposite to the rotational direction of the stirring blades 452 can allow air to pervade the inside of the fodder extensively by injecting air into spaces of fodder produced by the stirring from a number of the injectors 453; the structure is not limited to this and alternatively, small number of air injectors 453 may inject air at high speed, or instead of the injectors 453 formed on side faces in the direction opposite to the rotational direction of the blades 452, the air injectors 453 may be formed on the upper or lower side faces of the stirring blades 452 or side faces in the rotational direction as well as on places of the combination of these places.

In addition, the structure is not limited to that the holes 44 for spraying air are provided on the bottom as mentioned above while air being injected from the air injectors 453 formed on the stirring blades 452, it may be of course to provide holes for spraying air to fodder formed on places other than the bottom, or it may also be to provide only the air injection from the air injectors 453 formed on the stirring blades 452 without the air spraying from the bottom.

For example, as shown in the figure, when a number of the air injectors 453 formed on side faces in the direction opposite to the rotational direction of the stirring blades 452 are provided while the holes 44 for spraying air from the bottom of fodder upward are provided on the bottom plate 43 in the third room 4, air can be injected from the air injectors 453 in the horizontal direction so as to produce a turbulent flow by impingements on the air from the holes 44 on the bottom of the third room 4, which is the dryer/cooler 4, preventing fixed air passages from being produced and resulting in the drying and cooling the entire fodder due to the diffusion of air itself into the inside of the fodder.

Therefore, the drying and cooling can be efficiently performed further without unevenness.

Moreover, the bottom plate 43 in the third room 4 combines the holes 44 for spraying air into the third room 4 with a discharge gate, so that air can be sprayed from the holes 44 when the bottom plate 43 is closed, and when discharging fodder, the bottom plate 43 is opened so as to drop and discharge the fodder outside.

In addition, a valve 47 is used when fodder is finally discharged outside, and when air is supplied from the aeration pipe 46, by closing the valve 47, the supplied air is sprayed from the holes 44 to the third room 4.

In this case, during the discharging fodder, which has completed the drying and cooling, from the bottom plate 43, the air from the air injectors 453 formed on the stirring blades 452 is sprayed over the entire dryer/cooler 4 so as to clean the inside thereof, enabling the residual fodder to be a minimum.

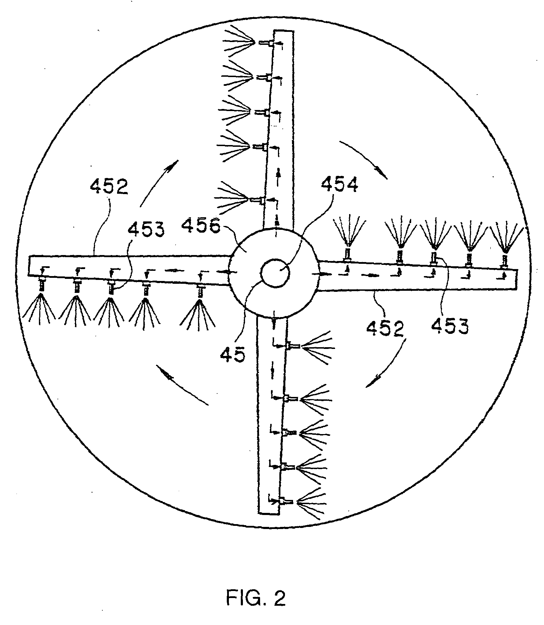

Fig. 2 is a fragmentary end view of an example of a shape of the stirring blades 452 of the agitator 45 shown in Fig. 1.

As shown in the figure, the four stirring blades 452 are provided in total at the end extremity of the rotational central shaft 451, each stirring blade 452 having the five air injectors 453, for spraying air.

The air spraying from the air injectors 453 is performed by supplying air from the rotational central shaft 451.

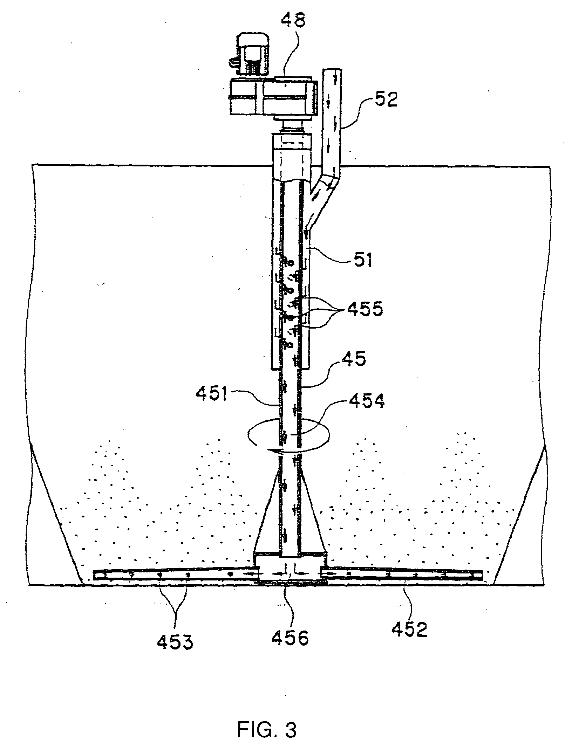

Fig. 3 is a drawing showing an example of airflow within the rotational central shaft 451 for spraying air from the air injectors 453 of the stirring blades 452 of the agitator 45.

At the upper end of the rotational central shaft 451, a motor 48 is provided for rotating the agitator 45 while the rotational central shaft 451 is provided with a central cavity 454 for passing air.

On the rotational central shaft 451, a hollow aeration cover 51 is also provided for covering the shaft 451 and further connected to an aeration pipe 52.

The aeration cover 51 is fixed, and the rotational central shaft 451 rotatably penetrates the center of the aeration cover 51.

First, outside air is led by the aeration pipe 52 so as to reach the aeration cover 51 linked to the aeration pipe 52.

From aeration holes 455 of the rotational central shaft 451 covered with the aeration cover 51, the air is led into the central cavity 454 of the rotational central shaft 451, and further into the stirring blades 452 via a hollow linking part 456 linking the rotational central shaft 451 to the stirring blades 452, and the air is finally exhausted outside from the air injectors 453.

The stirring blades 452 may be provided with cavities, which are linked to a plurality of the air injectors 453, for spraying the air in the cavities, or each of the air injectors 453 may have a pipe linking the hollow linking part 456 to each air injector 453 for spraying air from the air injectors 453.

Any structure may be satisfactory as long as at least it is spraying air from the air injectors 453 via the stirring blades 452 from the rotational central shaft 451.

In addition, although not shown, the air outside may be supplied compulsorily by a fan arranged separately, and it is preferable that air be supplied at a high speed.

Moreover, it is preferable that the air be switchable between hot air and cold air. That is, in the drying process, the hot air is sprayed and further in the cooling process, the cold air is sprayed for drying and cooling fodder.

The switching between hot air and cold air may employ a known example such as a structure using a heater.

In addition, a structure may also be satisfactory, in which normal air, i.e., the cold air, is only sprayed without the switching.

As described above, the dryer/cooler 4 shown in the figures is of a single batch cycle type, in which the heat-treatment is first performed in the first room 2, which is the heat-treatment unit, and then, the fodder stored in the second room 3 is fed to the dryer/cooler 4 as needed by an amount of one batch.

Then, while the stirring blades 452 of the agitator 45 are rotated, hot air is injected from the air injectors 453.

In addition to the above, hot air is also injected from the bottom of the third room 4.

Thereby, moisture is eliminated by air while fodder being stirred, and the air is exhausted outside via the dust collection filter 41 in the third room 4.

Thereby, the entire fodder can be efficiently dried.

Next, if the entire fodder has been dried, air is switched from the hot air to the cold air so as to spray the cold air.

Thereby, the entire fodder can be efficiently cooled.

If the fodder has been cooled, the agitator 45 is stopped rotating and the fodder is discharged downward by opening the bottom plate 43.

In addition, in the discharging process for discharging fodder on the bottom plate 43, the rotation of the agitator 45 may be of course continued to rotate for minimizing the residual fodder in the third room 4 to a minimum.

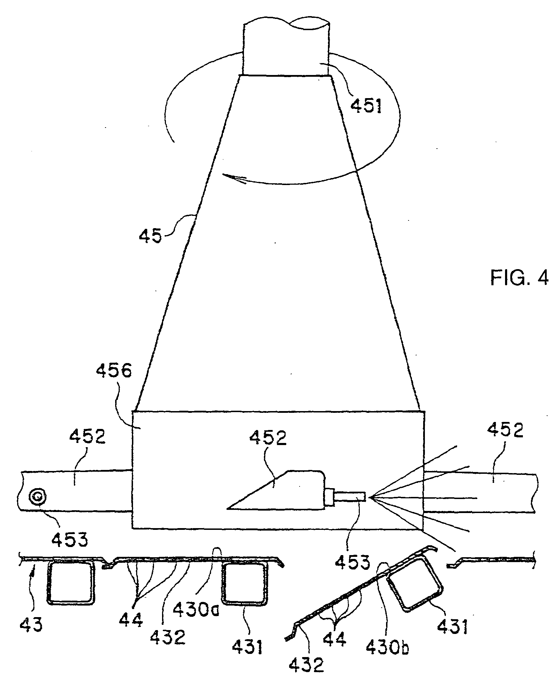

Fig. 4 is a drawing of an example of the bottom plate 43.

As shown in the figure, the bottom plate 43 is constituted of a number of bottom-plate components 430, each component 430 comprising a closing shaft 431 and a plate 432, and each component 430 is structured so that the plate 432 is openable and closable about the closing shaft 431 as an axis.

Therefore, by opening a number of the bottom-plate components 430 that are linked together, fodder in the third room 4 drops downward while by closing all of a number of the bottom-plate components 430 that are linked together, the bottom plate 43 is structured.

In addition, the entire bottom-plate components 430 are simultaneously opened and closed in conjunction with each other.

Opening and closing states of a bottom-plate component 430a and a bottom-plate component 430b shown in the figure are different from each other for being evident from descriptions, in which the bottom-plate component 430a shows a state of structuring the bottom plate 43 by the closure thereof while the bottom-plate component 430b shows a state that the component 430b is slightly opened, i.e., a partly opened state. In the practical operations, the bottom-plate component 430a, the bottom-plate component 430b, and the other bottom-plate components 430 are entirely operated in synchronous with each other.

Next, the plate 432 of the bottom-plate component 430 is provided with a number of the holes 44 for passing air through.

Air can be sprayed through the holes 44 to the fodder on the bottom plate 43 from the bottom side upwardly.

In addition, the hole 44 may have any diameter as long as mash fodder does not drop, and the shapes, the positional arrangement, and the number of the holes 44 can be arbitrarily set up according to necessities.

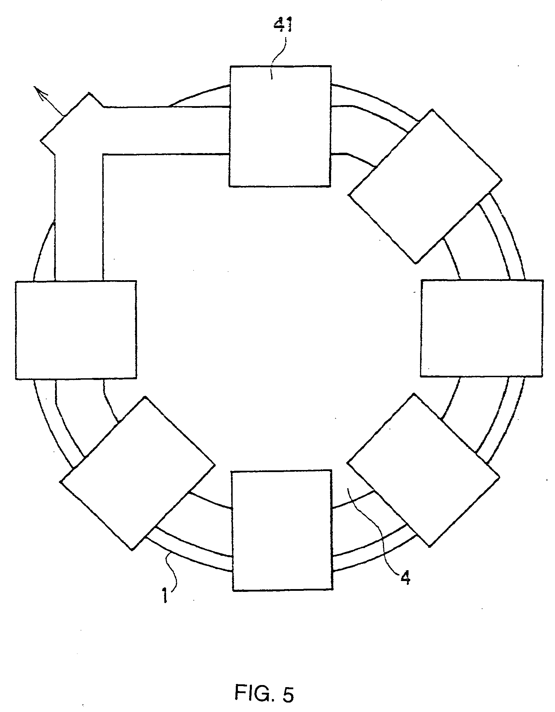

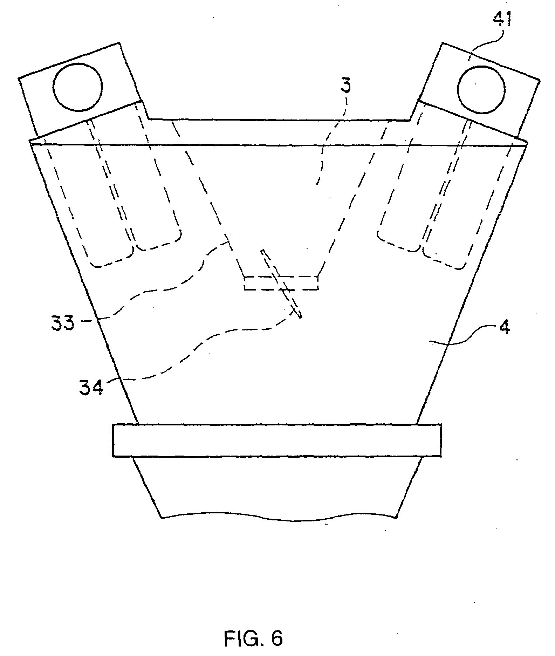

Figs. 5 and 6 are drawings showing an example of the arrangement of the filters 41 in the third room 4 and the situation of exhausted air in the dryer/cooler 4.

A number of the filters 41 are arranged in the circumferential direction for efficiently exhausting air from the third room 4.

### Advantages

1. Since in the heat-treatment unit 2, fodder is stirred with the batch mixer having the twin-shaft paddle mixer 22 while steam is sprayed, a first advantage is obtained that the stirring efficiency is extremely high; the entire fodder can be uniformly heated; Salmonella and the like can be absolutely eliminated efficiently; and extremely safe heat-treatment can be performed.
   By stirring fodder especially with the twin-shaft paddle mixer 22, the steam spray is minimized to a short period of time; then the fodder can be efficiently stirred in the state that the steam spray is stopped; a sufficient heating time can be obtained; excessive steam spraying can be prevented so as to prevent the degradation of the fodder; and the entire fodder can be uniformly heated enabling the pasteurizing of the entire fodder to be performed.
2. Since the buffer hopper 3, in which at least the internal surface is heated, is provided between the heat-treatment unit 2 and the dryer/cooler 4, a second advantage is obtained that the insufficiently heated fodder dropped from the heat-treatment unit 2 can be heated enabling the pasteurizing of the fodder to be performed with the heat-treatment.
3. Since the dryer cooler is structured to have a shape of a substantial circular cone having an apex at the bottom, a polygonal substantial pyramid having an apex at the bottom and being close to a substantial circular cone, a substantial circular cylinder, or a polygonal substantial prism being close to a substantial circular cylinder, a third advantage is obtained that the entire fodder can be discharged from the dryer/cooler without residual fodder, improving discharge efficiency.
4. Since the dryer/cooler has an agitator comprising a rotational central shaft and stirring blades having air injectors capable of injecting air, a fourth advantage is obtained that during spraying air for drying and cooling fodder, air can be sprayed to the inside of the fodder while the fodder being stirred, so that the drying and cooling efficiencies can be extremely improved; by the air injectors of the stirring blades, air can be injected in various directions along with the rotation of the stirring blades, enabling the entire fodder to be uniformly dried and cooled.
   In a case especially where the stirring blades rotating horizontally in parallel with a bottom plate of the dryer/cooler are provided, and further the air injectors are arranged on side faces of the stirring blades in the direction opposite to the rotational direction of the stirring blades, after vertical air passages in fodder produced by air injected from the fodder bottom are broken, air is injected in the horizontal direction to an upward air flow so as to produced defused air flows in various directions, so that air can be sprayed to the entire fodder.
5. Furthermore, since the rotational central shaft of the agitator has a central cavity which is communicated with the air injectors of the stirring blades while a fixed aeration cover is provided over aeration holes connected to the central cavity of the rotational central shaft, a fifth advantage is obtained that air can be supplied to the rotating agitator so as to inject the air from the air injectors.

### Reference Numerals

1: heat-treatment apparatus
10: upper opening
2: heat-treatment unit (first room)
21: steam spray nozzle
22: paddle mixer
221: shaft
222: paddle
23: openable lid
3: buffer hopper (second room)
31: electrical heating surface
32: baffle
33: inner wall
34: on-off valve
4: dryer/cooler (third room)
41: dust collection filter
42: side surface
43: bottom plate
430: bottom-plate component
431: closing shaft
432: plate
44: hole
45: agitator
451: rotational central shaft
452: stirring blade
453: air injector
454: central cavity
455: aeration hole
456: linking part
46: aeration pipe
47: valve
48: motor
51: aeration cover
52: aeration pipe

## Claims

1. A batch-cycle type heat-treatment apparatus for treatment of material like mash fodder comprising:
a heat-treatment unit (2) for heating the material; and
a dryer cooler (4) disposed below the heat-treatment unit (2) for drying and cooling the heated material, **characterized in that**
a buffer hopper (3) having an on-off valve (34) is disposed between the heat-treatment unit (2) and the dryer cooler (4),
wherein at least the inner surface of the buffer hopper (3) can be heated so as to have the buffer hopper (3) being capable of heating the material dropping from the heat-treatment unit (2).

2. A batch-cycle type heat treatment apparatus according to claim 1, **characterized in that** the dryer cooler (4) provided with an agitator (45) comprising a rotational central shaft (451) and stirring blades (452) having air injectors (453) being capable of spraying air so as to dry and/or heat/cool the material by injecting air while the material being stirred.

3. A batch-cycle type heat-treatment apparatus for treatment of material like mash fodder comprising a dryer cooler (4) provided with an agitator (45) comprising a rotational central shaft (451) and stirring blades (452) having air injectors (453) being capable of spraying air so as to dry and/or heat/cool the material by injecting air while the material is being stirred.

4. A batch-cycle type heat treatment apparatus according to claim 3, **characterized in that** the apparatus comprising a heat treatment unit (2) for heating the material, whereby the dryer cooler (4) is disposed below the heat treatment unit (2) for drying and cooling the heated material.

5. A batch-cycle type heat treatment apparatus according to one of the preceding claims, **characterized in that** the heat treatment unit (2) comprises a batch mixer having a twin shaft paddle mixer (22) as well as means for spraying steam to the material so as to perform the heat treatment.

6. A batch-type heat treatment apparatus according to one of the preceding claims, **characterized in that** the shape of the dryer cooler (4) is one of a substantial circular cone having an apex at the bottom, a polygonal substantial pyramid having an apex at the bottom and being close to a substantial circular cone, a substantial circular cylinder, and a polygonal substantial prism being close to a substantial circular cylinder.

7. An apparatus according to one of the preceding claims 2-6, wherein the stirring blades (452) are located in a bottom portion forming the dryer cooler (4) and rotated in a direction parallel to a bottom plate (43) of the dryer cooler (4), and
wherein a plurality of the air injectors (453) being capable of spraying air are arranged on side faces of the stirring blades (452) in the direction opposite to the rotational direction of the stirring blades (452).

8. An apparatus according to one of the preceding claims 2-7, wherein the rotational central shaft (451) of the agitator (45) is provided with a central cavity (454) and a hollow linking part (456) disposed in a linking part to the stirring blades (452) for communicating with the central cavity (454),
wherein at least in an upper portion forming the rotational central shaft (451), aeration holes (455) connected to the central cavity (454) of the rotational central shaft (451) are formed while a fixed aeration cover (51) is also provided, so that in a rotating state of the rotational central shaft (451), the fixed aeration cover (51) covers an upper portion forming the rotational central shaft (451) having the aeration holes (455), and
wherein if air is supplied to the aeration cover (51), the supplied air is fed to the central cavity (454) of the rotational central shaft (451) via the aeration holes (455), so that air can be injected from the air injectors (453) of the stirring blades (452) even during the rotation of the stirring blades (452).

9. A heat treatment method using a batch-cycle type heat treatment apparatus for treatment of material like mash fodder according to one of the preceding claims, **characterized in that** the material is being heated by stirring the material with the batch mixer while steam is being sprayed on the material; and
after which the material is temporarily stored in a buffer hopper in which the material is being heated, subsequently the material is dried and cooled in a dryer cooler.

10. Method according to claim 9, **characterized in that** in the dryer cooler the material is being stirred whilst air is being injected to dry and cool the heated material.
